# EUROPEAN PATENT APPLICATION

(11) **EP 4 845 087 A1**
(43) Date of publication of application: **25.11.2026**
(21) Application number: 25177204.2
(22) Date of filing: 19.05.2025
(51) Int. Cl.: H04L 9/00, H04L 9/30, H04L 9/32, G06F 21/52, G06F 21/54, G06F 21/71

(54) **METHOD FOR EXECUTING A POST-QUANTUM CRYPTOGRAPHIC ALGORITHM FOR DIGITAL SIGNATURE WITH ENHANCED SECURITY**

(71) Applicant: Nagravision Sàrl, 1033 Cheseaux-sur-Lausanne (CH)
(72) Inventor: Villegas, Karine, 1033 Cheseaux-sur-Lausanne (CH); Lefort, Carine, 1033 Cheseaux-sur-Lausanne (CH); Taha, Mounir, 1033 Cheseaux-sur-Lausanne (CH)
(74) Representative: Novagraaf International SA

(57) **Abstract**

The present disclosure provides a method for executing a cryptographic algorithm by at least one processor, including a generation process for generating a valid data item of the cryptographic algorithm. The generation process includes computing a candidate data item by executing a probabilistic algorithm using a random value, and determining if the candidate data item is a valid candidate data item based on at least one predetermined criterion. The method is characterized in that the generation process includes repeating the computing step at least a predefined number of iterations, where this predefined number of iterations is an integer strictly greater than 1, regardless of whether one valid candidate data item has been computed.

## Description

### FIELD OF INVENTION

The present disclosure relates to cryptographic algorithms, and more particularly to a method and system for executing a cryptographic algorithm including a probabilistic algorithm with enhanced security against fault injection attacks and other security-related threats.

### BACKGROUND

Cryptographic algorithms play a crucial role in securing digital communications and protecting sensitive information in modem computing systems. These algorithms are designed to provide confidentiality, integrity, and authenticity of data in various applications, such as secure messaging, digital signatures, and key exchange protocols.

In recent years, the field of cryptography has faced new challenges with the advent of quantum computing. Quantum computers have the potential to break many widely used cryptographic algorithms. This has led to increased research and development in post-quantum cryptography, which aims to create cryptographic systems that can withstand attacks from both classical and quantum computers.

One significant area of post-quantum cryptography is lattice-based cryptography. Lattice-based cryptographic algorithms are considered promising candidates for post-quantum security due to their resistance to known quantum attacks and their efficiency in implementation. Among these, the Module-Lattice-Based Digital Signature Algorithm (ML-DSA) - defined in FIPS 204 (Federal Information Processing Standard issued by NIST (the U.S. National Institute of Standards and Technology) in 2024) - has emerged as a promising signature algorithm.

However, the implementation of cryptographic algorithms, including post-quantum ones like ML-DSA, faces several technical challenges. One major challenge is the vulnerability of these algorithms to side-channel attacks and fault injection attacks. These attacks exploit physical characteristics of the cryptographic implementation, such as power consumption, electromagnetic emissions, or intentionally induced errors, to extract sensitive information or compromise the security of the system.

Fault injection attacks, in particular, pose a significant threat to the security of cryptographic systems like ML-DSA. In these attacks, an adversary deliberately introduces errors or faults into the cryptographic computations, often through physical means such as voltage glitches, clock glitches, laser or electromagnetic pulses. By analyzing the behavior of the system under these faulty conditions, the attacker may be able to deduce secret information or bypass security measures.

The ML-DSA scheme consists of three core algorithms: Key-Gen for key generation, Sign for digital signature, and Verify for signature verification. The signature algorithm uses randomness and is used to cryptographically sign messages. It requires access to a private key. It is crucial to secure this algorithm, as the private key must be protected from leakage or tampering. Any compromise can allow an attacker to retrieve the private key, forge valid signatures, and undermine the integrity of the signature process.

To prevent leakage of private key information through the signature itself, the signature algorithm includes a mechanism known as a rejection loop. During this process, the algorithm checks whether the generated signature meets certain security criteria. If it fails, the signature is discarded and regenerated using new randomness. The number of iterations in the rejection loop can vary for each signature, resulting in a variable runtime for the signing process.

It has been appreciated that a method is needed that overcomes one or more of these problems, in particular that enhances resistance against fault attacks and reverse engineering in cryptographic systems like ML-DSA.

### SUMMARY

This Summary is provided to introduce a selection of concepts in a simplified form that are further described below in the Detailed Description.

The present disclosure concerns a method for executing a cryptographic algorithm by at least one processor. The method includes a generation process for generating a valid data item of the cryptographic algorithm. The generation process includes computing a candidate data item by executing a probabilistic algorithm using a random value, and determining if the candidate data item is a valid candidate data item based on at least one predetermined criterion, such as a predetermined security criterion. The generation process includes repeating the computing step at least a predefined number N of iterations, where N is an integer strictly greater than 1, regardless of whether one valid candidate data item has been computed.

In the present disclosure, the computing step is repeated regardless of whether a valid candidate data item is computed. This approach aims to introduce redundancy in the cryptographic algorithm execution, in particular if a valid data item is obtained before the number N of iterations is reached. This redundancy can be leveraged to detect a potential anomaly or anomalous event indicative of a security-related attack (e.g., a fault injection attack) and to potentially correct a corrupted candidate data item. This approach makes the cryptographic method more resistant to fault attacks and side-channel analysis.

In an embodiment, the method may include repeating the computing and determining steps of the generation process with a different random value in response to determining that a candidate data item is not a valid candidate data item. Additionally, in response to determining a valid candidate data item before the predefined number N of iterations has been reached, the method may include fixing the random value at a value used to compute the valid candidate data item, and repeating the computing step using the fixed random value until the predefined number N of iterations has been reached. The method may further include outputting the valid data item - as a final result of the generation process - after the predefined number N of iterations has been reached.

Before the predefined number N of iterations is reached, once a valid candidate data item has been computed, fixing the random value to the value used to compute this valid data item allows to proceed with repeating the candidate data item computation, in a redundant manner, using this fixed random value until the predefined number N of iterations is reached. Such redundant execution can then be leveraged to detect an anomaly and possibly correct compromised candidate data item(s) due to injection of a fault by an attacker.

In other embodiments, the method may include determining a candidate set including the plurality of candidate data items respectively computed at the successive iterations using the same random value, comparing the candidate data items of the candidate set with one another, and upon detection of at least two candidate data items that differ from one another within the candidate set, detecting an anomalous event. Upon detection of differing candidate data items (i.e., not identical candidate data items), the method may determine if one of the candidate data items has been more frequently computed than the others, and in a positive event (i.e., if one of the candidate data items has been more frequently computed than the other(s)), output the most frequently computed candidate data item as the valid data item, subject to successfully verifying that it is valid. In a negative event (i.e., if there is no candidate data item more frequently computed than the other(s)), the method may abort the generation process without outputting any valid data item or execute the entire generation process again.

These additional steps provide mechanisms for detecting and handling potential fault attacks or hardware malfunctions, further enhancing the security and reliability of the cryptographic algorithm execution. Furthermore, in the event of a fault attack, outputting the most frequently computed candidate data item as the valid data item prevents the attacker from realizing that a fault was successfully produced.

In other embodiments, the predetermined criterion - or predetermined security criterion - may be configured to enable the determination of whether the candidate data item reveals sensitive data. The determining step may include measuring a parameter of at least part of the candidate data item, comparing the measured parameter to an allowed range or limit, and determining that the candidate data item is valid if the measured parameter is within the allowed range or within the allowed limit (i.e., below or above the limit, depending on whether the limit is an upper bound or a lower bound).

The present method helps prevent the leakage of sensitive information through the cryptographic algorithm's outputs (final or intermediate results).

In other embodiments, the cryptographic algorithm may comprise a digital signature algorithm, such as a Module Lattice-based Digital Signature Algorithm. Alternatively, the generation process may be for generating a prime number used in at least one cryptographic operation.

Th present method can be applied to various types of cryptographic algorithms, enhancing security across different cryptographic applications.

In other embodiments, the predefined number N of iterations may be computed based on an average number of iterations of the computing step required to obtain one valid candidate data item, determined based on statistical analysis. This approach adjusts the level of redundancy based on the algorithm's historical performance, optimizing the balance between security and computational efficiency while ensuring sufficient protection against fault attacks.

Alternatively, the predefined number N of iterations may be randomly selected within a predefined set of values for each execution of the generation process. This random selection introduces unpredictability in the execution pattern, making it more difficult for an attacker to determine when a valid candidate has been found and thus complicating some attacks, like side-channel attacks, that attempt to analyze the behavior of the algorithm.

The present disclosure also concerns:
- a data processing system comprising at least one processor configured to perform the steps of the method described above;
- a computer program comprising instructions which, when the program is executed by a computer, cause the computer to carry out the steps of the method described above is provided; and
- a computer-readable storage medium comprising instructions which, when executed by a computer, cause the computer to carry out the steps of the method described above is provided.

### BRIEF DESCRIPTION OF FIGURES

Embodiments of the invention will be described, by way of example, with reference to the following drawings, in which:
Fig. 1 illustrates a flowchart of a method for executing a probabilistic algorithm in a cryptographic system, according to an embodiment.
Fig. 2 illustrates a flowchart of a redundancy loop process of the method of Fig. 1, according to an embodiment.
Fig. 3 illustrates a system diagram of an entity configured to execute a cryptographic algorithm including the probabilistic algorithm of Fig. 1, according to an embodiment.

Common reference numerals are used throughout the figures to indicate similar features.

### DETAILED DESCRIPTION

The present disclosure relates to a method and cryptographic system for executing a cryptographic algorithm. The cryptographic algorithm may be probabilistic or include a probabilistic algorithm. The method executes the cryptographic algorithm, which includes a generation process that produces valid data items, such as digital signatures, through a probabilistic approach. This generation process enhances security and reliability by providing protection against security-related attacks, such as fault injection attacks, and reducing the risk of leakage of sensitive data. The present approach may introduce redundancy in computation of candidate data items within the generation process, which allows to detect an attack and, in some cases, to potentially mitigate it.

The term "probabilistic algorithm" refers to an algorithm whose behavior or output is not deterministic, but instead involves an element of randomness. In the present disclosure, a probabilistic algorithm is an algorithm that uses random choices, like random values, during execution, and whose outputs or behaviors (like encryption, signature, etc.) vary even on identical inputs due to this element of randomness. In cryptographic applications, it may involve an iterative process where certain security criteria must be met before a valid output is produced. Specifically for digital signature schemes like ML-DSA, the signature generation includes rejection sampling techniques where candidate signatures are generated and tested against one or more security criteria, potentially requiring multiple iterations before a valid signature is obtained.

The present method for executing the cryptographic algorithm includes a generation process for generating a valid data item (e.g., a valid digital signature or a prime number). This generation process involves computing a candidate data item by executing the probabilistic algorithm with at least one random value. The method then determines if the computed candidate data item is valid based on at least one predetermined security criterion.

According to the present disclosure, the step of computing a candidate data item is repeated for a predefined number N of iterations, where N is an integer strictly greater than 1. This repetition occurs regardless of whether one valid candidate data item has been computed. This approach aims to introduce redundancy into the process, which enables the detection of an anomalous event indicative of a security-related attack (e.g., a fault injection attack) and potentially the correction of a corrupted candidate data item. This approach enhances security and fault tolerance.

If a valid candidate data item is determined before reaching the predefined number N of iterations, the random value used in the probabilistic algorithm may be fixed. This fixed random value may then be used to compute other candidate data item(s) in the subsequent iteration(s), in a redundant manner, until the predefined number N of iterations is reached. The method may compare the candidate data items, computed during these different iterations using the same random value, with one another. If differences are detected among these candidate data items, it indicates an anomalous event, potentially signaling a security-related attack. In such cases, the method may implement additional security measures, such as selecting the most frequently computed valid candidate as the final output, which allows to mitigate the attack, or aborting the process entirely preferably after erasing the sensitive values.

In some implementations, the cryptographic algorithm comprises a digital signature algorithm, and the generation process is specifically designed for generating a valid digital signature using a probabilistic algorithm.

The digital signature algorithm may be based on module lattice cryptography, which is an area of post-quantum cryptography. For example, the cryptographic algorithm includes a digital signature algorithm such as specified in Module-Lattice-Based Digital Signature Algorithm (ML-DSA) standard.

The present approach includes different measures providing a robust framework for executing a cryptographic algorithm using an element of randomness to compute a valid data item that may be a final output or an intermediate result. By introducing controlled redundancy and implementing checks for consistency, the method aims to detect an attack and possibly mitigate it, thus enhancing the security and reliability of cryptographic operations using a probabilistic approach.

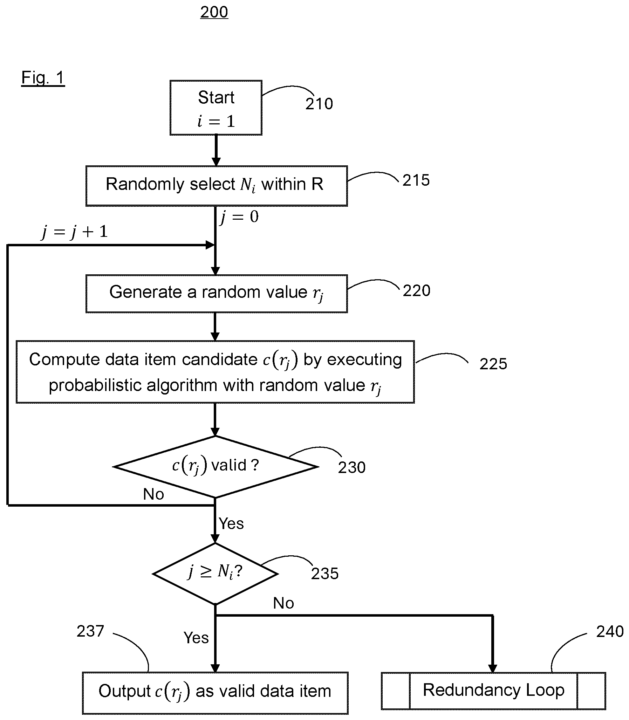

Figure 1 illustrates a method 200 for generating a valid data item using a probabilistic algorithm, which may either constitute a cryptographic algorithm itself (e.g., a digital signature algorithm) or be a component of a cryptographic algorithm (e.g., RSA key generation, Diffie-Hellman key exchange, Elliptic Curve Cryptography (ECC), or any other cryptographic algorithm using a probabilistic algorithm (for example to generate prime numbers)).

The valid data item may be a final output produced by cryptographic operation(s) (e.g., a digital signature) or an intermediate piece of data used in cryptographic operation(s) (e.g., a prime number).

The generation process employs the probabilistic algorithm to compute one or more candidate data items. Due to the probabilistic nature of the algorithm, multiple iterations of the candidate data item computation may be needed before a valid data item is successfully produced. At least one predetermined security criterion is used to determine the validity of each computed candidate data item. In some implementations, this predetermined security criterion may be configured to enable the determination of whether a candidate data item reveals sensitive data, thereby enhancing the security of the cryptographic process.

According to the present disclosure, even if a valid candidate data item is produced, the method 200 replays the candidate data item computation for a predefined number N of iterations, where N is an integer strictly greater than 1. This approach provides redundancy in the computation process, which can be leveraged for detecting and potentially mitigating security-related attacks.

If a computed candidate data item is determined to be invalid based on the predetermined security criterion, the method 200 repeats the candidate data item computation with a different random value. This ensures that the method 200 continues to generate new candidate data items until a valid one is found.

When a valid candidate data item is first computed before reaching the predefined number N of iterations, the method 200 continues with a redundancy loop process 240. This loop process 240 fixes the random value at the value used to compute this valid candidate data item. In the loop process 240, the candidate data item computation is repeated, in a redundant manner, using this fixed random value until the predefined number N of iterations is reached. After reaching the predefined number N of iterations, the method 200 may either output the valid data item, abort the method 200 or restart it, depending on the result of a consistency check between the candidate data items computed using the same random value.

The method 200 can be applied to various probabilistic algorithms used in cryptography, including those for generating digital signatures and prime numbers.

The method 200 executes its redundancy mechanism regardless of whether an attack is detected, providing continuous protection against potential security threats. In the event of an attack, such as a fault injection attack, on the cryptographic system, the method 200 may detect this attack, based on the consistency check between candidates produced through the redundancy mechanism, and possibly mitigate it based on a statistical analysis of these candidates. This approach helps to maintain the integrity and security of the cryptographic process in various operational scenarios.

The method 200 for generating a valid data item using a probabilistic algorithm will now be described in more detail, according to an embodiment, with reference to Figure 1. As previously explained, the probabilistic algorithm may be a cryptographic algorithm itself (e.g., a digital signature algorithm) or serve as a subroutine within cryptographic operations (such as by generating intermediate data for use within the cryptographic operations).

The method 200 begins at a step 210 by initializing a first iteration index i. This first iteration index i represents the number of executions of the method 200. This first iteration index may be initialized to 1 and then updated when each execution of the method 200 begins.

At a step 215, the method 200 determines an upper bound, referred to as "N" or "Ni", representing a predefined maximal number of iterations of a step of candidate data item computation (step 225).

The value of this upper bound N (or Ni) may be computed based on an average number of iterations of the computing step 225 required to obtain one valid candidate data item. This average number of iterations can be determined based on statistical analysis of previous executions of the generation process. This determination can include:
- collecting and statistically analyzing data from previous executions of the generation process for generating a valid data item directly on the processor 101, or on one or more other processors (and then extrapolating to the processor 101), or
- simulating executions of the generation process on a simulation tool and statistically analyzing the resulting data.

Advantageously, the upper bound N (or Ni) may be set to a value greater than (or even equal to) the determined average number of iterations required to obtain one valid candidate data item, in order to cause the execution of the redundancy loop process (step 240) in most cases when the method 200 is executed. For example, if statistical analysis shows that on average, 4 iterations are required to obtain a valid signature in ML-DSA, N may be set to a value greater than or equal to 4, for example 10 or more.

In some embodiments, the value of this upper bound "Ni" may be different for each execution "i" of the method 200. For example, the value Ni may be selected, preferably randomly, within a predefined range (or interval) of integer values, or a predefined set of integer values, referred to as "R", with a lower bound exceeding (or equal to) the determined average number of iterations and a range size ensuring sufficient variability for Ni. The variability of Ni adds an additional layer of security.

Alternatively, the predefined number of iterations "N" may be fixed, i.e., the same for any execution "i" of the method 200.

As will be described later in more detail, the "redundancy loop" (step 240) refers to a process within the execution of the probabilistic algorithm where:
- a valid candidate data item is first computed before reaching a predefined number N of iterations;
- the random value used to compute this valid candidate is fixed for subsequent candidate data item computation(s);
- the computation of a candidate data item is repeated using this fixed random value until the predefined number N (or Ni) of iterations is reached;
- the resulting candidate data items, all computed using the same random value, are collected in a candidate set for subsequent comparison and analysis.

The redundancy loop 240 serves to introduce controlled redundancy into the cryptographic process, enabling the detection and potential mitigation of security-related attacks, such as fault injection attacks.

The method 200 then initializes a second iteration index j, here to zero (j=0). In the present embodiment, this second iteration index j represents a number of times the step 225 of computing a candidate data item has been executed within a single execution of the method 200.

At a step 220, the method 200 generates a random value rj, where j is initially zero. This random value introduces randomness into the execution of the probabilistic algorithm.

Then, the method 200 proceeds to the computation step 225 where a candidate data item c(rj) is computed by executing the probabilistic algorithm with the random value rj generated in the step 220. In the context of a digital signature algorithm, such as in Module-Lattice-Based Digital Signature Algorithm (ML-DSA), this step may generate a component of the candidate signature.

At a step 230, the method 200 determines if the computed candidate data item c(rj) is valid based on at least one predetermined security criterion. This step 230 may involve measuring a parameter of at least part of the candidate data item c(rj). For example, in ML-DSA, this may involve measuring part of the candidate signature component, for example by calculating a norm. The method 200 may then compare the measured parameter to an allowed range, bound or limit to check if it is within the range, bound or limit. The method 200 may determine that the candidate data item c(rj) satisfies the predetermined security criterion and is valid if the measured parameter is within the allowed range, bound or limit.

If the candidate data item c(rj) is not valid (No after step 230), the method 200 increments the second iteration index j by 1 and loops back to the step 220 with j=j+1 to generate a new random value rj+1 (different from the previous one).

If the candidate data item c(rj) is valid (Yes after step 230), in other words if one valid candidate data item c(rj) has been computed, the method 200 proceeds to a step 235.

At the step 235, the method 200 checks if the second iteration index j is greater than or equal to the predefined upped bound of iterations N (or Ni). If j is not greater than or equal to N (or Ni) (No after step 235), the method 200 moves to the redundancy loop, referred to as a process 240, that will be described later. If j is greater than or equal to N (or Ni) (Yes after step 235), the method 200 proceeds to a step 250 where the valid candidate data item c(rj) is output as a valid data item.

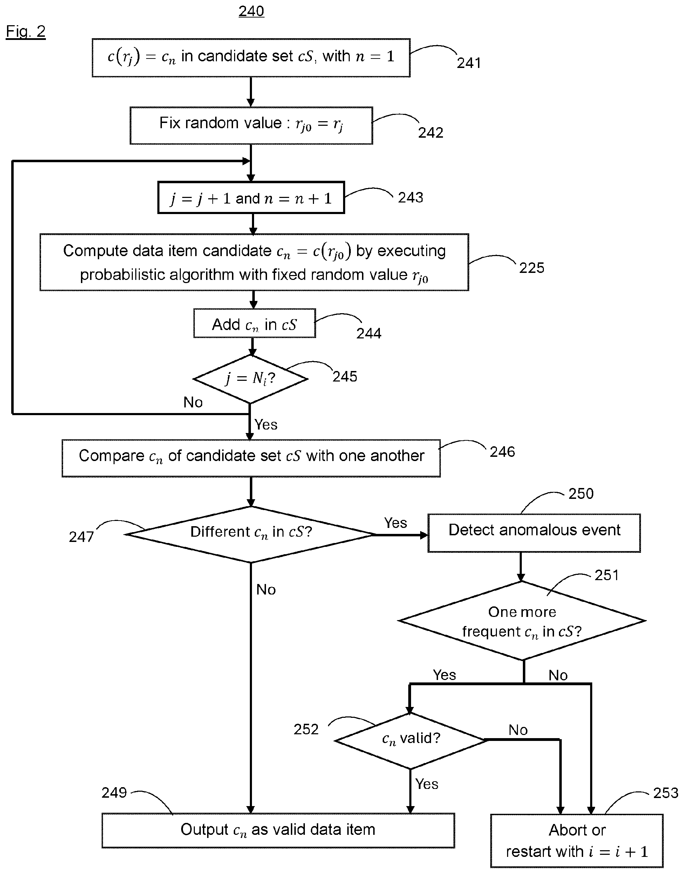

The redundancy loop process 240 is illustrated in Figure 2, according to an embodiment. The redundancy loop process 240 begins at a step 241 where a candidate set cS is initialized with a candidate of index n=1. Specifically, the candidate data item computed at the last iteration j of the computation step 225, referred to as candidate data item "c1", and determined as valid in the step 230 is the first candidate populating the candidate set cS.

The "candidate set" refers to a collection of candidate data items computed during multiple iterations of the probabilistic algorithm using the same random value. The candidate set may be initialized with the first valid candidate data item computed and subsequently populated with additional candidate data items computed in subsequent iterations "j" up to the predefined number N (or Ni) of iterations, during the redundancy loop process. This set is later used for comparison and analysis to detect potential anomalies or inconsistencies that may indicate a security-related attack on the cryptographic process, and optionally mitigate them.

The redundancy loop process 240 then moves to a step 242 where the random value rj is fixed at its previous value, denoted rj0. This fixed random value rj0 corresponds to the random value used at the last iteration j of the computation step 225 that produced here the first valid candidate data item. Following this, at a step 243, the values j and n are incremented by 1.

The redundancy loop process 240 then includes the step 225 that computes a new candidate data item cn = c(rj0) by executing the computation step 225 with the fixed random value rj0 (i.e., without generating a new random value). At this stage, the candidate data item computation 225 is re-executed, but this time using the fixed random value rj0 rather than a new random value, as was done prior to computing the first valid candidate data item. At step 244, this newly computed candidate data item cn is added in the candidate set cS.

The redundancy loop process 240 then proceeds to a step 245 of checking if the second iteration index j equals the upper bound N (or Ni). If not (No after step 245), the redundancy loop process 240 loops back to the step 243. If the second iteration index j equals the upper bound Ni (Yes after step 245), the redundancy loop process 240 may move to a step 246.

In the step 246, the redundancy loop process 240 compares the elements c1, c2, ... of the candidate set cS with one another and determines if there are two or more candidates cn that are distinct (i.e., not identical) from one another within the candidate set cS. The plurality of candidates c1, c2, ... computed by the probabilistic algorithm using the same random value rj0 should be identical. The step 246 constitutes a consistency check between the candidates c1, c2, ...: these candidates c1, c2, ... are compared with one another to check whether they are identical or not. This detection enhances security by identifying potential fault injection attacks or other security threats that may have occurred during the execution of the digital signature algorithm.

If pairwise distinct (i.e., not identical) candidates cn are found in the candidate set cS, the redundancy loop process 240 moves to a step 250 of detecting an anomalous event that may be indicative of a security-related attack. The presence of at least two candidates not identical with one another within the candidate set cS is indicative of an anomalous event.

In an embodiment, from the step 250, the redundancy loop process 240 may proceed to a step 251 where the redundancy loop process 240 checks if there is one candidate cn that has been more frequently computed than the other(s) within the candidate set cS. This may indicate a more reliable result in the event of an attack. The aim of step 251 is to identify, if any, the most frequently computed identical candidate data item.

From the step 251, if one most frequently computed candidate data item has been identified (branch Yes after step 251), the redundancy loop process 240 moves to a step 252 of checking whether this most frequently computed candidate data item is valid or not. In a positive event (branch Yes after 252), the redundancy loop process 240 moves to the step 249 where the redundancy loop process 240 outputs this most frequently computed candidate data item cn as the valid data item. This approach enhances security by selecting the most commonly occurring valid result, potentially mitigating the effects of a fault injection attack. Such approach enables correction of the result, preventing the attacker from realizing that an effective fault was produced.

If, at the step 252, the most frequently computed candidate data item cn is not valid (branch No after 252), or if, at the step 251, there is no candidate data item more frequently computed than the other(s) within cS (branch No after step 251), the redundancy loop process 240 moves to a step 253 where the redundancy loop process 240 either aborts the method 200 without outputting any valid data item or executes again the method 200 after incrementing the first iteration index i (i=i+1) to attempt to generate a new valid data item.

A maximum number of failed executions of the method 200 may be preconfigured in the system. Once this maximum number of executions is reached, the method 200 may be aborted. If the method 200 is aborted either directly after one failed execution or after a maximum number of failed executions has been reached, an alert message may be issued to indicate a failure such as a potential security-related attack.

The steps 251, 252 provide an additional layer of security by preventing the output of potentially compromised data and, in some implementations, allowing for a fresh attempt at generating a valid data item.

In another embodiment, from the step 250, the redundancy loop process 240 may directly proceed to the step 253 (without executing the steps 251, 252). In that case, if an anomalous event is detected, the redundancy loop process 240 directly aborts or causes the method 200 to be executed again after incrementation of the first iteration index i (i=i+1) to attempt to generate a new valid data item.

If it is determined, at the step 247, that all candidates c1, c2, ... within the candidate set cS are identical (i.e., the same ones) (branch No after step 247), the redundancy loop process 240 moves directly to the step 249 to output this candidate data item as a valid data item. It is pointed out that the validity of this candidate data item has been successfully checked in the previous step 230. This scenario indicates consistent results across all iterations of the computation step 225, suggesting a high likelihood of a secure and valid output.

The redundancy loop process 240 enhances security in cryptographic operation(s) (e.g., digital signature) using randomness at some step(s) to influence a final or intermediate output, by introducing multiple checks and comparisons. By repeating the candidate computation step 225 for a predefined number N (or Ni) of iterations, even after a valid candidate has been found, the method 200 introduces redundancy that can be used to detect security-related attacks, such as fault injection attacks. This approach enhances the security and reliability of the cryptographic algorithm execution. For example, in a Module-Lattice-Based Digital Signature Algorithm (ML-DSA), the redundancy loop process 240 may detect inconsistencies in signature generation that could indicate a fault injection attack. By comparing multiple iterations of the signature generation process (applied on the same data) using a same random value, the redundancy loop process 240 can identify anomalies that may not be apparent in a single iteration.

Furthermore, the redundancy introduced by the loop process 240 allows for potentially correcting errors introduced by attacks. By selecting the most frequently computed valid candidate, the method 200 may be able to produce a correct signature even in the presence of some faulty computations. This approach adds a layer of fault injection tolerance to the digital signature process, enhancing its reliability in potentially hostile environments.

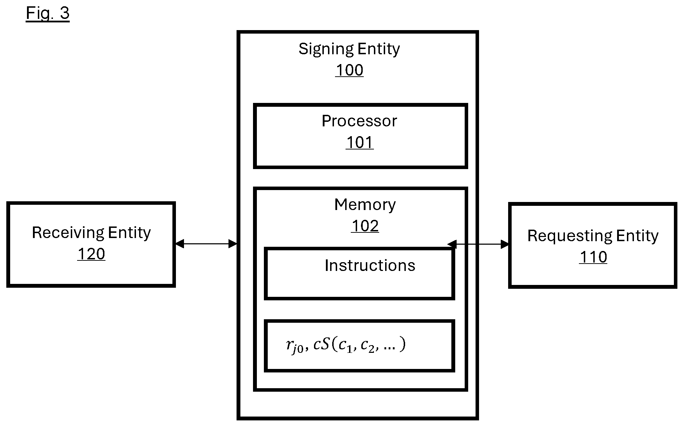

Figure 3 illustrates a system diagram showing an entity 100 configured to execute the cryptographic algorithm implementing the probabilistic algorithm described with reference to Figures 1 and 2, according to an embodiment. In some implementations, the entity 100 may be a signing entity.

The entity 100 includes at least one processor 101 and at least one memory 102. The memory 102 stores:
- parameters including key(s), random value(s), a candidate set cS(c₁,c₂,...) and/or any other necessary information for executing the cryptographic algorithm, and
- instructions of a computer program.

The processor 101 is configured to execute instructions of the computer program, stored in memory 102, which cause the processor 101 to perform cryptographic operations including the steps of the method 200 previously described.

The entity 100 may include one or more communication interface(s) (not represented in figure 3) to communicate with at least one requesting entity 110 and optionally at least one receiving entity 120. A requesting entity 110 may communicate with the entity 100 to request execution of cryptographic operation(s) (e.g., digital signatures). In some implementation, a receiving entity 120 may communicate with the signing entity 100 and receive for example cryptographic artifacts produced by the cryptographic operation(s) (e.g., signed data).

The term "entity" refers to any functional or logical unit, including but not limited to a device, component, module, system, subsystem, or software-based process, implemented in hardware, software, or any combination thereof.

Requesting entities 110 may include, for example, various application modules or functional components operating within the same system or across connected systems.

In an embodiment, upon receiving a request for signing data, the signing entity 100 processes the data to generate a corresponding digital signature, then communicates the signed data to one or more receiving entities.

The entity 100 may function as an integral part of the system or operate independently.

The system enables communication and cryptographic operations between the entity 100 and both the receiving entity 120 and requesting entity 110 through their respective communication paths.

In some implementations, the method 200 may be executed using multiple hardware resources that respectively compute in parallel a plurality of candidate data items using different random values. For instance, different iterations of the candidate computing step 225 may be performed simultaneously on different processor cores or dedicated cryptographic hardware units. If at least one valid candidate data item is produced during this first parallel execution of the method 200, at least one subsequent parallel execution may be implemented across the multiple hardware resources. During this subsequent parallel execution, all hardware resources use the same random value-specifically, a random value that produced a valid candidate data item in the first parallel execution-to compute candidate data items in parallel. This subsequent parallel execution introduces redundancy that enables consistency checking, anomaly detection, and potential attack mitigation, as previously described. The parallel approach can significantly reduce the time required to complete the predefined number N of iterations, particularly when implementing the redundancy loop process 240.

The systems and methods described herein may be implemented in any form of computing or electronic device. The term "computer," as used herein, encompasses any device with processing capabilities sufficient to execute instructions. This includes, but is not limited to, personal computers, servers, mobile devices, personal digital assistants, and similar devices.

Such devices may include one or more processors, such as microprocessors, controllers, or other suitable types of processors, capable of executing instructions to control the device's operation. For example, in some implementations using a system-on-a-chip architecture, the processors may include fixed-function blocks (hardware accelerators) that perform parts of the method in hardware rather than software or firmware. Platform software, such as an operating system or similar, may be installed to support the execution of application software.

The described functionality may be implemented in hardware, software, or any combination thereof. When implemented in software, the instructions or code can be stored on or transmitted via a computer-readable medium. Such media include computer-readable storage media, which may be volatile or non-volatile, removable or non-removable, and implemented using any technology for storing information such as program code, data structures, or other data. Examples include, but are not limited to, ROM, EEPROM, RAM, magnetic or optical storage, flash memory, or any other storage medium accessible by a computer. Communication media that facilitate the transfer of software, such as via coaxial cables, fiber optics, DSL, or wireless signals, may also be considered part of computer-readable media.

Alternatively, or in addition, some or all of the described functionalities may be implemented using hardware logic components. Examples include, but are not limited to, application-specific integrated circuits, system-on-a-chip systems, field-programmable gate arrays, application-specific standard products, and complex programmable logic devices. In some cases, software instructions may also be implemented in dedicated circuits, such as programmable logic arrays or digital signal processors.

The computing device may operate as a standalone system or as part of a distributed system, where tasks are performed collectively by multiple devices connected via a network. Such devices may communicate over a network connection to perform the described functionality. For instance, software may be stored on a remote computer and accessed by a local device, which may download and execute portions of the software as needed. Similarly, some instructions may be processed locally, while others may execute on remote systems or networks. In some cases, the computing device may be remote and accessible via a communication interface. Storage of program instructions may also be distributed across a network or stored in a combination of local and remote locations. For example, software may reside on a remote computer and be accessed by a local terminal, or the system may execute some software locally while other components operate on remote servers.

Features of any of the examples or embodiments outlined above may be combined to create additional examples or embodiments without losing the intended effect. It should be understood that the description of an embodiment or example provided above is by way of example only, and various modifications could be made by one skilled in the art. Furthermore, one skilled in the art will recognise that numerous further modifications and combinations of various aspects are possible. Accordingly, the described aspects are intended to encompass all such alterations, modifications, and variations that fall within the scope of the appended claims.

## Claims

1. A method (200) for executing a cryptographic algorithm by at least one processor (101), said method (200) including a generation process for generating a valid data item of the cryptographic algorithm, said generation process including the steps of:
i) computing (225) a candidate data item by executing a probabilistic algorithm using a random value;
ii) determining (230, 252) if the candidate data item is a valid candidate data item based on at least one predetermined criterion;
the cryptographic algorithm method **characterized in that** the generation process includes repeating the computing step i) (225) at least a predefined number of iterations (N; Ni), where said predefined number (N; Ni) is an integer strictly greater than 1, regardless of whether one valid candidate data item has been computed.

2. The method (200) according to claim 1, wherein in response to determining that a candidate data item is not valid, includes repeating the steps i) and ii) of the generation process with a different random value.

3. The method (200) according to claim 1 or 2, wherein, in response to determining a valid candidate data item before the predefined number (N; Ni) of iterations has been reached, fixing (242) the random value at said random value used to compute said first valid candidate data item and repeating the step i) (225) using the fixed random value until the predefined number of iterations (N; Ni) has been reached.

4. The method (200) according to claim 3, further comprising a step (249) of outputting the valid data item, after the predefined number of iterations (N; Ni) has been reached.

5. The method (200) according to any of claims 3 and 4, further comprising the steps of: determining (241) a candidate set (cS) including the plurality of candidate data items (c1, c2, ...) respectively computed at the successive iterations of the computing step i) using the same random value, comparing (245) the candidate data items of the candidate set with one another; and upon detection (247) of at least two candidate data items that differ from one another within the candidate set (cS), detecting (250) an anomalous event.

6. The method (200) according to claim 5, further comprising, upon detection of two differing candidate data items within the candidate set (cS), the steps of:
- determining (251) if one of the candidate data items of the candidate set (cS) has been more frequently computed than the others;
- in a positive event, outputting (249) the most frequently computed candidate data item as the valid data item.

7. The method (200) according to claim 6, wherein the step of outputting (249) is performed subject to successfully verifying that the most frequently computed candidate data item is valid (252).

8. The method (200) according to claim 6 or 7, wherein, in a negative event, the method (200) proceeds with:
- aborting (253) the generation process without outputting the valid data item; or
- executing again the generation process.

9. The method (200) according to any of claims 1 to 8, wherein said at least one predetermined criterion is configured to enable the determination of whether the candidate data item reveals sensitive data.

10. The method (200) according to any of claims 1 to 9, wherein the step ii) includes: measuring a parameter of at least part of the candidate data item, comparing the measured parameter to an allowed range or limit, and determining that the candidate data item is valid if the measured parameter is within the allowed range or limit.

11. The method (200) according to any of claims 1 to 10, wherein the cryptographic algorithm comprises a digital signature algorithm.

12. The method (200) according to claim 11, wherein the digital signature algorithm comprises a Module Lattice-based Digital Signature Algorithm.

13. The method (200) according to any of claims 1 to 10, wherein the generation process is for generating a prime number used in at least one cryptographic operation.

14. The method (200) according to any of claims 1 to 13, wherein the predefined number of iterations (N; Ni) is determined (215) based on an average number of iterations of the computing step i) required to obtain one valid candidate data item, said average number of iterations being determined based on statistical analysis.

15. The method (200) according to any of claims 1 to 14, wherein the predefined number of iterations (Ni) is randomly selected (215) within a predefined set of values for each execution of the generation process.

16. A data processing system (100) comprising at least one processor (101) configured to perform the steps of the method (200) according to any of claims 1 to 15.

17. A computer program comprising instructions which, when the program is executed by a computer, cause the computer to carry out the steps of the method (200) according to any of claims 1 to 15.

18. A computer-readable storage medium comprising instructions which, when executed by a computer, cause the computer to carry out the steps of the method (200) according to any of claims 1 to 15.
